# EUROPÄISCHE PATENTANMELDUNG

(11) **EP 4 140 799 A1**
(43) Veröffentlichungstag der Anmeldung: **01.03.2023**
(21) Anmeldenummer: 22187871.3
(22) Anmeldetag: 29.07.2022
(51) Int. Cl.: B60L 15/38, B60L 15/20

(54) **ANTRIEBSSYSTEM MIT VERBESSERTER BATTERIEAUFWÄRMUNG UND KRAFTFAHRZEUG**

(30) Priorität: 23.08.2021 DE 102021121737
(71) Anmelder: VOLKSWAGEN AG, 38440 Wolfsburg (DE)
(72) Erfinder: NEMATI, Issa, 30163 Hannover (DE)
(74) Vertreter: Bals & Vogel Patentanwälte PartGmbB

(57) **Zusammenfassung**

Die vorliegende Erfindung betrifft ein Antriebssystem (1) für ein Kraftfahrzeug (2), aufweisend einen ersten Elektromotor (3) zum Antreiben des Kraftfahrzeugs (2), eine Traktionsbatterie (4) zum Versorgen des ersten Elektromotors (3) mit elektrischer Energie, eine Steuerungsvorrichtung (5) zum Steuern des ersten Elektromotors (3) und der Traktionsbatterie (4) sowie einen mit der Steuerungsvorrichtung (5) datenkommunizierend gekoppelten Temperatursensor (6) zum Ermitteln einer Ist-Batterietemperatur der Traktionsbatterie (4), wobei die Steuerungsvorrichtung (5) zum Betreiben des Antriebssystems (1) mehrere von einem Fahrer des Kraftfahrzeugs (2) wählbare Betriebsmodi aufweist, wobei die Betriebsmodi einen ersten Betriebsmodus sowie einen zweiten Betriebsmodus aufweisen, wobei der zweite Betriebsmodus gegenüber dem ersten Betriebsmodus ein steileres Beschleunigungsverhalten und/oder Verzögerungsverhalten aufweist. Die Steuerungsvorrichtung (5) ist ausgebildet und eingerichtet, in einem ersten Betriebszustand des Antriebssystems (1), in welchem der erste Betriebsmodus gewählt und die ermittelte Ist-Batterietemperatur geringer ist als ein vorgegebener unterer Batterietemperaturschwellwert, in den zweiten Betriebsmodus zu wechseln. Ferner betrifft die Erfindung ein Kraftfahrzeug (2) mit einem erfindungsgemäßen Antriebssystem (1).

## Beschreibung

Die vorliegende Erfindung betrifft ein Antriebssystem für ein Kraftfahrzeug. Ferner betrifft die Erfindung ein Kraftfahrzeug mit einem gattungsgemäßen Antriebssystem.

Es sind Antriebssysteme für Kraftfahrzeuge, wie beispielsweise Elektrofahrzeuge (FEV), Plugin-Hybridfahrzeuge (PHEV) oder Full-Hybridfahrzeug (fHEV), bekannt, die einen Elektromotor zum Antreiben des Kraftfahrzeugs, eine Traktionsbatterie zum Versorgen des Elektromotors mit elektrischer Energie sowie eine Steuerungsvorrichtung zum Steuern des Elektromotors und der Traktionsbatterie aufweisen. Hybridfahrzeuge unterscheiden sich von Elektrofahrzeugen insbesondere durch einen zusätzlichen Verbrennungsmotor zum Antreiben des Kraftfahrzeugs und/oder eines Generators zum Erzeugen elektrischer Energie zum Betreiben des Elektromotors bzw. zum Laden der Traktionsbatterie.

Zum Verbessern einer Fahrleistung sowie einer Reichweite von Fahrzeugen mit einem derartigen Antriebssystem, weisen die hierfür verwendeten Traktionsbatterien eine besonders hohe Leistungsdichte auf. Das bedeutet, dass diese Traktionsbatterien gegenüber herkömmlichen Batterien eine verhältnismäßig große Kapazität zur Speicherung elektrischer Energie pro Volumeneinheit aufweisen.

Die Leistung derartiger Traktionsbatterien ist maßgeblich von zwei Faktoren abhängig, einem Ladezustand (SOC) der Traktionsbatterie sowie einer Batterietemperatur (TOB) der Traktionsbatterie. In einem tiefen Temperaturbereich, beispielsweise nach längerem Stillstand bei Frost, ist die Leistungsverfügbarkeit der Traktionsbatterie besonders stark eingeschränkt, sodass die Performance des Antriebssystems spürbar negativ beeinträchtigt ist. Die Fahrbarkeit des Kraftfahrzeugs ist in diesem Zustand somit erheblich verschlechtert.

Zum Reduzieren dieser negativen Eigenschaft von Traktionsbatterien weisen einige Antriebssysteme eine Batterieheizvorrichtung auf, mittels welcher die Batterietemperatur erhöhbar ist. Die Batterieheizvorrichtung weist beispielsweise Heizelemente und/oder Wärmetauscher auf, welche innerhalb eines Batteriegehäuses der Traktionsbatterie, beispielsweise zwischen den Batteriezellen oder an einer Wandung des Batteriegehäuses, angeordnet sind. Die Heizvorrichtung ist mittels der Traktionsbatterie betreibbar, sodass durch den Aufheizvorgang der Ladezustand der Traktionsbatterie verringert wird. Auf diese Weise ist eine Zeitspanne der reduzierten Leistungsfähigkeit der Traktionsbatterie zumindest verkürzbar. Nachteilig hierbei ist, dass hierdurch die Reichweite des Kraftfahrzeugs reduziert und möglicherweise ein Wirkungsgrad des Antriebssystems erheblich verschlechtert wird.

Aus dem Dokument DE 10 2012 205 852 A1 sind ein Verfahren und ein System zum Erwärmen einer Traktionsbatterie für ein Kraftfahrzeug bekannt. Das System ist ausgebildet, eine aktuelle Batterietemperatur zu detektieren und bei einer zu niedrigen Batterietemperatur ein zyklisches Laden und Entladen der Traktionsbatterie durchzuführen. Aufgrund des hohen Innenwiderstands der Traktionsbatterie führt dies zu einer Erwärmung der Traktionsbatterie. Das Dokument DE 10 2016 222 827 A1 offenbart ein Kraftfahrzeug sowie ein Verfahren zum Betreiben eines Kraftfahrzeugs, bei welchem ein Rekuperieren in Abhängigkeit einer Temperatur eines zum Rekuperieren verwendeten Elektromotors sowie eines vom Fahrer des Kraftfahrzeugs ausgewählten Betriebsmodus erfolgt.

Derartige Verfahren und Antriebssysteme haben den Nachteil, dass in einigen bestimmten Betriebszuständen des Kraftfahrzeugs ein verhältnismäßig langsames Erwärmen der Traktionsbatterie erfolgt, sodass der Betriebszeitraum, in welchem die Performance des Antriebssystems eingeschränkt ist, übermäßig lang ist. Zusätzliche Heizvorrichtungen haben zudem den Nachteil, dass ein Energieverlust besonders hoch ist.

Es ist daher Aufgabe der vorliegenden Erfindung, die voranstehend beschriebenen Nachteile bei einem Antriebssystem für ein Kraftfahrzeug zu beheben oder zumindest teilweise zu beheben. Insbesondere ist es Aufgabe der vorliegenden Erfindung ein Antriebssystem für ein Kraftfahrzeug und ein Kraftfahrzeug zu schaffen, die auf eine einfache und kostengünstige Art und Weise eine übermäßige Entladung der Traktionsbatterie vermeiden und/oder bei einer verhältnismäßig kalten Traktionsbatterie eine verbesserte Performance aufweisen und/oder ein verbessertes Erwärmen der Traktionsbatterie gewährleisten.

Voranstehende Aufgabe wird durch die Patentansprüche gelöst. Demnach wird die Aufgabe durch ein Antriebssystem für ein Kraftfahrzeug mit den Merkmalen des unabhängigen Anspruchs 1 sowie durch ein Kraftfahrzeug mit den Merkmalen des nebengeordneten Anspruchs 10 gelöst. Weitere Merkmale und Details der Erfindung ergeben sich aus den Unteransprüchen, der Beschreibung und den Zeichnungen. Dabei gelten Merkmale und Details, die im Zusammenhang mit dem erfindungsgemäßen Antriebssystem beschrieben sind, selbstverständlich auch im Zusammenhang mit dem erfindungsgemäßen Kraftfahrzeug und jeweils umgekehrt, sodass bezüglich der Offenbarung zu den einzelnen Erfindungsaspekten stets wechselseitig Bezug genommen wird beziehungsweise werden kann.

Gemäß einem ersten Aspekt der Erfindung wird die Aufgabe durch ein Antriebssystem für ein Kraftfahrzeug gelöst. Das Antriebssystem weist einen ersten Elektromotor zum Antreiben des Kraftfahrzeugs, eine Traktionsbatterie zum Versorgen des ersten Elektromotors mit elektrischer Energie, eine Steuerungsvorrichtung zum Steuern des ersten Elektromotors und der Traktionsbatterie sowie einen mit der Steuerungsvorrichtung datenkommunizierend gekoppelten Temperatursensor zum Ermitteln einer Ist-Batterietemperatur der Traktionsbatterie auf. Die Steuerungsvorrichtung weist zum Betreiben des Antriebssystems mehrere von einem Fahrer des Kraftfahrzeugs wählbare Betriebsmodi auf, wobei die Betriebsmodi einen ersten Betriebsmodus sowie einen zweiten Betriebsmodus aufweisen, wobei der zweite Betriebsmodus gegenüber dem ersten Betriebsmodus ein steileres Beschleunigungsverhalten und/oder Verzögerungsverhalten aufweist. Erfindungsgemäß ist die Steuerungsvorrichtung ausgebildet und eingerichtet, in einem ersten Betriebszustand des Antriebssystems, in welchem der erste Betriebsmodus gewählt und die ermittelte Ist-Batterietemperatur geringer ist als ein vorgegebener unterer Batterietemperaturschwellwert, in den zweiten Betriebsmodus zu wechseln.

Das Antriebssystem ist vorzugsweise als rein elektrisches Antriebssystem ausgebildet. Erfindungsgemäß kann es vorgesehen sein, dass das Antriebssystem als hybrides Antriebssystem, insbesondere gemäß einem PHEV oder fHEV, ausgebildet ist und somit zum Antreiben des Kraftfahrzeugs einen zusätzlichen Verbrennungsmotor aufweist. Weiter bevorzugt weist das rein elektrische oder hybride Antriebssystem zum Antreiben des Kraftfahrzeugs mehrere Elektromotoren auf, welche weiter bevorzugt unterschiedlichen Antriebsachsen des Kraftfahrzeugs zugeordnet sind. Demnach weist das Antriebssystem vorzugsweise den ersten Elektromotor zum Antreiben einer Vorderachse sowie einen zweiten Elektromotor zum Antreiben einer Hinterachse des Kraftfahrzeugs auf. Die Elektromotoren sind dabei vorzugsweise derart betreibbar, dass ein Elektromotor, beispielsweise der erste Elektromotor, ein Drehmoment zum Antreiben des Kraftfahrzeugs bereitstellt, während ein anderer Elektromotor, beispielsweise der zweite Elektromotor, rekuperiert und somit das Kraftfahrzeug abbremst sowie hierbei elektrische Energie erzeugt. Die Elektromotoren sind dabei vorzugsweise derart betreibbar, dass das Kraftfahrzeug hierbei beschleunigt wird, eine konstante Geschwindigkeit hält oder verzögert.

Die Traktionsbatterie ist zum Versorgen des ersten Elektromotors und vorzugsweise weiterer Elektromotoren des Antriebssystems zum Antreiben des Kraftfahrzeugs oder zum Ausführen anderer technischer Funktionen am Kraftfahrzeug, mit elektrischer Energie ausgebildet. Hierfür weist die Traktionsbatterie vorzugsweise ein Batteriegehäuse auf, in welchem eine Mehrzahl von Batteriezellen angeordnet ist. Das Batteriegehäuse ist zum Schutz der Batteriezellen vor Umwelteinflüssen, wie beispielsweise Feuchtigkeit oder mechanische Einwirkungen, ausgebildet. Die Batteriezellen sind vorzugsweise als Feststoffbatteriezellen ausgebildet. Vorzugsweise sind die Batteriezellen als Pouchzellen ausgebildet. Die Batteriezellen sind vorzugsweise zur separaten Ansteuerung ausgebildet. Das bedeutet, dass verschiedene Batteriezellen zu einem Zeitpunkt unterschiedlich ladbar und entladbar sind. Ein Ladestrom einer ersten Batteriezelle der Traktionsbatterie kann beispielsweise höher sein als ein Ladestrom einer zweiten Batteriezelle der Traktionsbatterie. Ebenso ist die erste Batterie vorzugsweise entladbar, während die zweite Batteriezelle gleichzeitig geladen wird. Die Traktionsbatterie weist vorzugsweise Lithium-Ionen oder dergleichen auf.

Der Temperatursensor ist vorzugsweise an oder in der Traktionsbatterie angeordnet. Erfindungsgemäß kann das Antriebssystem auch mehrere Temperatursensoren aufweisen, die an oder in der Traktionsbatterie angeordnet sind. Mittels des Temperatursensors bzw. der Temperatursensoren ist die Temperatur der Traktionsbatterie bzw. an einer oder mehreren bestimmten Stellen der Traktionsbatterie messbar. Über die datenkommunizierende Kopplung mit der Steuereinheit, vorzugsweise mittels eines Datenkabels oder einer Funkverbindung, sind die gemessenen Temperaturwerte vom Temperatursensor zur Steuerungsvorrichtung übermittelbar.

Die Steuerungsvorrichtung ist zum Steuern des ersten Elektromotors sowie der Traktionsbatterie ausgebildet. Vorzugsweise ist die Steuerungsvorrichtung zum Steuern etwaiger weiterer Elektromotoren des Kraftfahrzeugs, insbesondere des Antriebssystems des Kraftfahrzeugs, ausgebildet und eingerichtet. Die Steuerungsvorrichtung weist vorzugsweise eine Leistungselektronik auf, die vorzugsweise einen Umrichter aufweist. Die Leistungselektronik ist vorzugsweise ausgebildet, die Traktionsbatterie gezielt zu Laden und zu entladen. Ferner ist die Leistungselektronik ausgebildet, den ersten Elektromotor und vorzugsweise die etwaig weiteren Elektromotoren zum Antreiben des Kraftfahrzeugs gezielt mit elektrischer Energie zu versorgen sowie vom ersten Elektromotor und vorzugsweise von den etwaig weiteren Elektromotoren rekuperierte Energie an die Traktionsbatterie zum Laden der Traktionsbatterie weiterzuleiten.

Die Steuerungsvorrichtung weist mehrere vordefinierte Betriebsmodi auf. Unter einem Betriebsmodus wird in diesem Zusammenhang ein Beschleunigungs- sowie Verzögerungsverhaltendes Antriebssystems verstanden. Die Betriebsmodi können beispielsweise einen Normalmodus mit ausgewogenem Beschleunigungs- und/oder Verzögerungsverhalten, einen Energiesparmodus mit relativ flachem Beschleunigungs- und/oder Verzögerungsverhalten sowie einen Sportmodus mit einem relativ steilen Beschleunigungs- und/oder Verzögerungsverhalten aufweisen. Erfindungsgemäß umfassen die Betriebsmodi zumindest den ersten Betriebsmodus und den zweiten Betriebsmodus, wobei der zweite Betriebsmodus gegenüber dem ersten Betriebsmodus ein steileres Beschleunigungsverhalten und/oder Verzögerungsverhalten aufweist. Das bedeutet, dass beispielsweise eine Zielgeschwindigkeit im zweiten Betriebsmodus bei gleicher Gaspedalstellung aufgrund einer höheren Beschleunigung schneller erreichbar ist als im ersten Betriebsmodus. Ebenso kann eine Verzögerung beim Abbremsen des Kraftfahrzeugs im zweiten Betriebsmodus größer sein als im ersten Betriebsmodus.

Demnach ist die Steuerungsvorrichtung ausgebildet und eingerichtet, den aktuellen Betriebsmodus zu ermitteln. Zudem ist die Steuerungsvorrichtung ausgebildet und eingerichtet, die gemessenen Temperaturwerte der Batterietemperatur der Traktionsbatterie mit dem unteren Batterieschwellwert zu vergleichen. Ferner ist die Steuerungsvorrichtung ausgebildet und eingerichtet, den ersten Betriebszustand des Antriebssystems zu erkennen. Im ersten Betriebszustand ist der erste Betriebsmodus ausgewählt, beispielsweise von einem Fahrer des Kraftfahrzeugs. Darüber hinaus weist die Traktionsbatterie im ersten Betriebszustand eine Batterietemperatur auf, die kleiner ist als der untere Batterietemperaturschwellwert. Der untere Batterietemperaturschwellwert kann erfindungsgemäß beispielsweise durch den Hersteller des Kraftfahrzeugs bzw. der Traktionsbatterie vordefiniert sein. Der untere Batterietemperaturschwellwert ist vorzugsweise derart bestimmt, dass die Leistungsfähigkeit der Traktionsbatterie oberhalb des unteren Batterietemperaturschwellwerts eine akzeptable Höhe, wie beispielsweise 90% einer maximalen Leistungsfähigkeit, und unterhalb des unteren Batterietemperaturschwellwerts eine nicht akzeptable Höhe aufweist. Schließlich ist die Steuerungsvorrichtung ausgebildet, den zweiten Betriebsmodus einzustellen, wenn der erste Betriebszustand ermittelt wurde.

Ein erfindungsgemäßes Antriebssystem für ein Kraftfahrzeug hat gegenüber herkömmlichen Antriebssystemen den Vorteil, dass mit einfachen Mitteln sowie auf eine kostengünstige Art und Weise ein Aufwärmen der Traktionsbatterie verbessert ist. Durch die Auswahl des zweiten Betriebsmodus mit einer höheren Fahrdynamik als der erste Betriebsmodus sind Batterieströme der Traktionsbatterie erhöhbar, wodurch ein schnelleres Aufwärmen der Traktionsbatterie erfolgt. Überdies sind die negativen Leistungseigenschaften einer zu kalten Traktionsbatterie durch eine solche Erhöhung der Fahrdynamik kompensierbar oder zumindest teilweise kompensierbar, sodass ein Fahrerlebnis für den Fahrer des Kraftfahrzeugs verbessert ist.

Gemäß einer bevorzugten Weiterentwicklung der Erfindung kann bei einem Antriebssystem vorgesehen sein, dass die Steuerungsvorrichtung ausgebildet und eingerichtet ist, bei Detektion des ersten Betriebszustands ein Warnsignal an den Fahrer auszugeben. Das Warnsignal ist vorzugsweise in Form eines Akustischen Signals, wie beispielsweise eines Warntons, einer Sprachansage oder dergleichen, ausgebbar. Hierfür können erfindungsgemäß Lautsprecher eines Entertainmentsystems des Kraftfahrzeugs verwendet werden. Alternativ oder zusätzlich ist das Warnsignal in Form eines optischen Signals, wie beispielsweise einer Warnleuchte, einer Text- und/oder Bildanzeige auf einem Monitor oder dergleichen, ausgebbar. Alternativ oder zusätzlich ist das Warnsignal in Form eines haptischen Signals, wie beispielsweise einem Vibrieren eines Lenkrads des Kraftfahrzeugs, einem Straffen eines Sicherheitsgurts oder dergleichen, ausgebbar. Dies hat den Vorteil, dass mit einfachen Mitteln sowie auf eine kostengünstige Art und Weise die Betriebssicherheit des Antriebssystems sowie das Fahrerlebnis für den Fahrer des Kraftfahrzeugs verbessert sind.

Es ist erfindungsgemäß bevorzugt, dass die Steuerungsvorrichtung ausgebildet und eingerichtet ist, bei Detektion des ersten Betriebszustands eine Eingabeaufforderung an den Fahrer zur manuellen Freigabe des Wechsels vom ersten Betriebsmodus in den zweiten Betriebsmodus auszugeben. Die Eingabeaufforderung ist vorzugsweise über eine Displayeinheit des Kraftfahrzeugs, insbesondere über einen Touchscreen eines Navigationssystems des Kraftfahrzeugs, ausgebbar. Die Eingabeaufforderung kann beispielsweise einen Text und/oder ein Bild aufweisen. Alternativ oder zusätzlich ist die Eingabeaufforderung in Form einer Sprachansage oder dergleichen ausgebbar. Dies hat den Vorteil, dass mit einfachen Mitteln sowie auf eine kostengünstige Art und Weise die Betriebssicherheit des Antriebssystems sowie das Fahrerlebnis für den Fahrer des Kraftfahrzeugs verbessert sind.

Weiter bevorzugt weist das Antriebssystem einen zweiten Elektromotor auf, wobei die Steuerungsvorrichtung ausgebildet und eingerichtet ist, den ersten Elektromotor mit einer höheren Leistung als einer vorgegebenen Soll-Leistung und den zweiten Elektromotor zum Kompensieren dieser Leistungsdifferenz im Generatorbetrieb zum Laden der Traktionsbatterie zu betreiben. Die Leistungsdifferenz ergibt sich aus der mittels der Steuerungsvorrichtung gewählten höheren Leistung zum tatsächlichen Betreiben des ersten Elektromotors zum Antreiben des Kraftfahrzeugs und der, beispielsweise vom Fahrer oder einem Fahrerassistenten, gewählten Soll-Leistung zum Betreiben des ersten Elektromotors zum Antreiben des Kraftfahrzeugs. Die Steuerungsvorrichtung ist demnach ausgebildet und eingerichtet, mittels des zweiten Elektromotors die zu viel bereitgestellte Antriebsleistung des ersten Elektromotors zu kompensieren. Durch das Betreiben des ersten Elektromotors mit der höheren Leistung und das Kompensieren der Leistungsdifferenz durch den zweiten Elektromotor sind die durch die Traktionsbatterie fließenden Batterieströme vergrößerbar. Dies hat den Vorteil, dass mit einfachen Mitteln sowie auf eine kostengünstige Art und Weise das Aufwärmen der Traktionsbatterie weiter verbessert ist.

In einer besonders bevorzugten Ausgestaltung der Erfindung weist die Traktionsbatterie mehrere miteinander verschaltete Batteriezellen auf, wobei die Steuerungsvorrichtung ausgebildet und eingerichtet ist, elektrische Energie zwischen den Batteriezellen gezielt zu verlagern. Die Batteriezellen sind vorzugsweise einzeln oder in Gruppen verschaltet und somit mittels der Steuerungsvorrichtung einzeln oder als Gruppe ansteuerbar. Vorzugsweise sind die Batteriezellen als Pouchzellen ausgebildet und zu einem oder mehrere Zellstapel zusammengefasst. Die Traktionsbatterie weist vorzugsweise eine Druckvorrichtung zum Zusammendrücken der Zellstapel auf. Vorzugsweise weist die Traktionsbatterie pro Zellstapel eine Druckvorrichtung oder eine Druckvorrichtung zum parallelen Zusammenpressen mehrerer nebeneinander angeordneter und/oder seriellen Zusammenpressen mehrerer in Reihe angeordneter Zellstapel auf. Durch die separate Ansteuerbarkeit der Batteriezellen bzw. der Gruppen von Batteriezellen sind mittels der Steuerungsvorrichtung einige Batteriezellen entladbar und mit der hierbei freiwerdenden elektrischen Energie gleichzeitig andere Batteriezellen aufladbar. Die Steuerungsvorrichtung ist vorzugsweise ausgebildet, das gegenseitige Auf- und Entladen der Batteriezellen zyklisch, insbesondere gemäß einer Schwingung, insbesondere einer harmonischen Schwingung, durchzuführen. Durch die Innenwiderstände der Batteriezellen entsteht somit Verlustwärme, die zum Aufwärmen der Traktionsbatterie ausnutzbar ist. Dies hat den Vorteil, dass mit einfachen Mitteln sowie auf eine kostengünstige Art und Weise das Aufwärmen der Traktionsbatterie weiter verbessert ist.

Vorzugsweise weist das Antriebssystem einen zusätzlichen elektrischen Energiespeicher mit einer geringeren Kapazität als die Traktionsbatterie auf, wobei die Steuerungsvorrichtung ausgebildet und eingerichtet ist, elektrische Energie zwischen der Traktionsbatterie und dem zusätzlichen elektrischen Energiespeicher gezielt zu verlagern. Der zusätzliche elektrische Energiespeicher ist vorzugsweise außerhalb eines Batteriegehäuses der Traktionsbatterie angeordnet. Vorzugsweise weist der zusätzliche elektrische Energiespeicher ein eigenes Speichergehäuse auf, durch welches der zusätzliche elektrische Energiespeicher vor Umwelteinflüssen, wie beispielsweise Feuchtigkeit oder mechanische Einwirkungen, geschützt ist. Die Kapazität des zusätzlichen elektrischen Energiespeichers beträgt vorzugsweise zwischen 1 % und 10 %, weiter bevorzugt zwischen 2 % und 8 % und besonders bevorzugt zwischen 3% und 6 % der Kapazität der Traktionsbatterie. Der zusätzliche elektrische Energiespeicher ist vorzugsweise ausgebildet und eingerichtet, elektrische Energie zum Betreiben des ersten Elektromotors, zumindest zum Unterstützen des Betreibens des ersten Elektromotors, bereitzustellen. Die Steuerungsvorrichtung ist vorzugsweise ausgebildet und eingerichtet, das gegenseitige Auf- und Entladen der Traktionsbatterie und des zusätzlichen elektrischen Energiespeichers zyklisch, insbesondere gemäß einer Schwingung, insbesondere einer harmonischen Schwingung, durchzuführen. Durch die Innenwiderstände der Traktionsbatterie entsteht somit Verlustwärme, die zum Aufwärmen der Traktionsbatterie ausnutzbar ist. Dies hat den Vorteil, dass mit einfachen Mitteln sowie auf eine kostengünstige Art und Weise das Aufwärmen der Traktionsbatterie weiter verbessert ist.

Gemäß einer bevorzugten Ausführungsform der Erfindung ist der zusätzliche elektrische Energiespeicher als Kondensator oder Batterie ausgebildet. Der Kondensator ist vorzugsweise als Hochleistungskondensator bzw. sogenannter "Supercap" ausgebildet. Ein Kondensator ist mit besonders hohen elektrischen Stromstärken betreibbar und somit gegenüber einer Batterie besonders schnell entladbar sowie aufladbar. Zudem ist eine Leistungsfähigkeit eines Kondensators weniger temperaturabhängig als die Leistungsfähigkeit der Traktionsbatterie. Das Antriebssystem ist vorzugsweise ausgebildet, bei einem Kaltstart zunächst den zusätzlichen elektrischen Energiespeicher zum Betreiben des Elektromotors zum Antreiben des Kraftfahrzeugs zu verwenden und den zusätzlichen elektrischen Energiespeicher über die Traktionsbatterie zu laden, insbesondere mit verhältnismäßig hohen Strömen, um die Traktionsbatterie hierdurch besonders schnell zu erwärmen. Dieses Laden des zusätzlichen elektrischen Energiespeichers kann erfindungsgemäß intermittierend erfolgen, sodass eine besonders hohe Ladestromhöhe realisierbar ist. Dies hat den Vorteil, dass mit einfachen Mitteln sowie auf eine kostengünstige Art und Weise das Aufwärmen der Traktionsbatterie weiter verbessert ist.

Besonders bevorzugt ist die Steuerungsvorrichtung ausgebildet und eingerichtet, bei Detektion des zweiten Betriebszustands, in welchem der zweite Betriebsmodus gewählt und die ermittelte Ist-Batterietemperatur höher ist als ein vorgegebener oberer Batterietemperaturschwellwert, in den ersten Betriebsmodus zurück zu wechseln. Der obere Batterietemperaturschwellwert ist ein vordefinierter Temperaturwert, bei welchem die Traktionsbatterie eine akzeptable Leistungsfähigkeit aufweist und somit nicht weiter durch zusätzliche Maßnahmen aufgeheizt werden muss. Die akzeptable Leistungsfähigkeit der Traktionsbatterie und der obere Batterietemperaturschwellwert werden vorzugsweise vom Hersteller der Traktionsbatterie oder des Antriebssystems vorgegeben, beispielsweise auf Basis von Technischen Spezifikationen der Traktionsbatterie, Labortestreihen, Probefahrten oder dergleichen. Das Zurückwechseln in den ersten Betriebsmodus bedeutet auch, dass wieder ein ursprünglich vom Fahrer des Kraftfahrzeugs gewünschter Betriebsmodus eingestellt wird. Vorzugsweise ist die Steuerungsvorrichtung ausgebildet und eingerichtet, beim Zurückwechseln in den ersten Betriebsmodus ein diesbezügliches Warnsignal und/oder eine Eingabeaufforderung an den Fahrer zur manuellen Freigabe des Wechsels vom zweiten Betriebsmodus in den ersten Betriebsmodus auszugeben. Dies hat den Vorteil, dass mit einfachen Mitteln sowie auf eine kostengünstige Art und Weise eine Energieeffizienz des Antriebssystems verbessert ist.

Es ist erfindungsgemäß bevorzugt, dass das Antriebssystem eine Batterieheizung zum Beheizen der Traktionsbatterie aufweist, wobei die Steuerungsvorrichtung zum Steuern der Batterieheizung in Abhängigkeit der ermittelten Ist-Batterietemperatur ausgebildet und eingerichtet ist. Die Batterieheizung weist vorzugsweise einen elektrisch betreibbaren Heizkörper zur Erzeugung von Wärme auf. Alternativ kann die Batterieheizung zum Verbrennen eines flüssigen oder gasförmigen Kraftstoffs zur Wärmeerzeugung ausgebildet sein. Weiter bevorzugt weist die Heizvorrichtung einen Wärmefluidkreislauf mit einem zirkulierbaren Wärmefluid zum Weiterleiten von Wärme des Heizkörpers über das Wärmefluid an die Traktionsbatterie auf. Vorzugsweise ist die Batterieheizung in eine Kühlvorrichtung zum Kühlen der Traktionsbatterie integriert, wobei das Wärmefluid vorzugsweise auch als Kühlfluid verwendbar ist. Dies hat den Vorteil, dass mit einfachen Mitteln sowie auf eine kostengünstige Art und Weise ein besonders schnelles Aufheizen der Traktionsbatterie gewährleistet ist.

Gemäß einem zweiten Aspekt der Erfindung wird die Aufgabe durch ein Kraftfahrzeug gelöst. Erfindungsgemäß weist das Kraftfahrzeug ein erfindungsgemäßes Antriebssystem auf. Bei dem erfindungsgemäßen Kraftfahrzeug ergeben sich sämtliche Vorteile, die bereits zu einem Antriebssystem gemäß dem ersten Aspekt der Erfindung beschrieben worden sind. Demnach hat das erfindungsgemäße Kraftfahrzeug gegenüber herkömmlichen Kraftfahrzeugen den Vorteil, dass mit einfachen Mitteln sowie auf eine kostengünstige Art und Weise ein Aufwärmen der Traktionsbatterie verbessert ist. Durch die Auswahl des zweiten Betriebsmodus mit einer höheren Fahrdynamik als der erste Betriebsmodus sind Batterieströme der Traktionsbatterie erhöhbar, wodurch ein schnelleres Aufwärmen der Traktionsbatterie erfolgt. Überdies sind die negativen Leistungseigenschaften einer zu kalten Traktionsbatterie durch eine solche Erhöhung der Fahrdynamik kompensierbar oder zumindest teilweise kompensierbar, sodass ein Fahrerlebnis für den Fahrer des Kraftfahrzeugs verbessert ist.

Ein erfindungsgemäßes Kraftfahrzeug mit einem erfindungsgemäßen Antriebssystem wird nachfolgend anhand von Zeichnungen näher erläutert. Es zeigen jeweils schematisch:
- Figur 1: in einer Seitenansicht eine bevorzugte erste Ausführungsform eines erfindungsgemäßen Kraftfahrzeugs, und
- Figur 2: in einer Seitenansicht eine bevorzugte zweite Ausführungsform eines erfindungsgemäßen Kraftfahrzeugs.

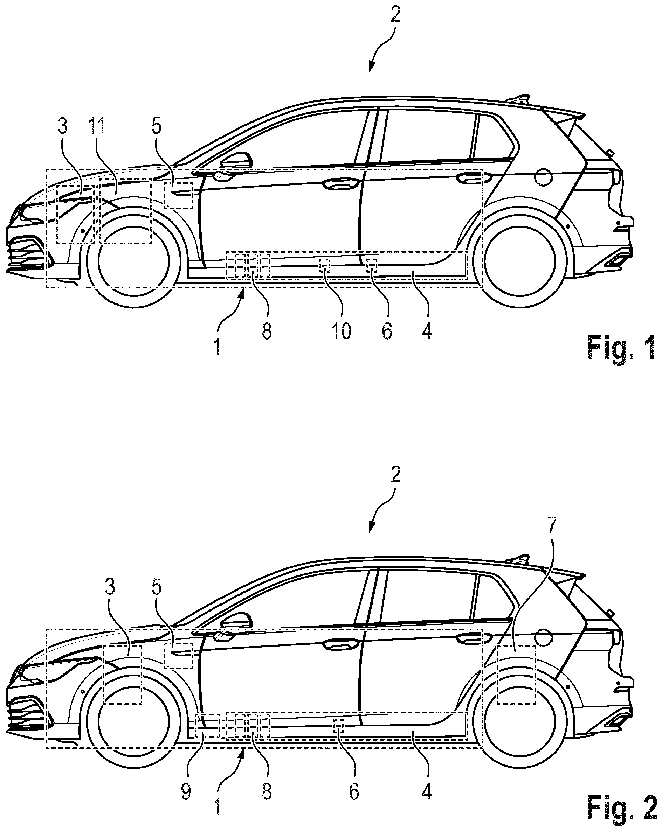

Elemente mit gleicher Funktion und Wirkungsweise sind in den Figuren 1 und 2 jeweils mit denselben Bezugszeichen versehen.

In Fig. 1 ist eine bevorzugte erste Ausführungsform eines erfindungsgemäßen Kraftfahrzeugs 2 schematisch in einer Seitenansicht dargestellt. Das Kraftfahrzeug 2 weist eine bevorzugte erste Ausführungsform eines erfindungsgemäßen Antriebssystems 1 auf. Das Antriebssystem 1 weist zum Antreiben des Kraftfahrzeugs 2 einen Verbrennungsmotor 11 sowie einen ersten Elektromotor 3 auf. Der erste Elektromotor 3 ist zudem als Generator verwendbar, beispielsweise zum Rekuperieren beim Bremsen oder durch Antreiben mittels des Verbrennungsmotors 11. Erfindungsgemäß kann zum Antreiben des Kraftfahrzeugs 2 sowie zum Rekuperieren auch noch ein in Fig. 1 nicht abgebildeter zweiter Elektromotor 7 (vgl. Fig. 2) vorgesehen sein.

Das Antriebssystem 1 weist zudem eine Traktionsbatterie 4 mit mehreren Batteriezellen 8 auf, von denen der besseren Übersicht halber nur einige dargestellt sind. In der Traktionsbatterie 4 ist ein Temperatursensor 6 zum Ermitteln der Ist-Batterietemperatur der Traktionsbatterie 4 angeordnet. Erfindungsgemäß können hierfür auch weitere Temperatursensoren 6 vorgesehen sein. Der Temperatursensor 6 kann erfindungsgemäß auch an einem Randbereich der Traktionsbatterie 4 angeordnet sein. Vorzugsweise weist das Antriebssystem 1 an jeder bzw. den meisten Batteriezellen 8 oder jedem bzw. den meisten Batteriezellenpaaren jeweils einen oder mehrere Temperatursensoren 6 auf.

Ferner weist das Antriebssystem 1 eine optionale Batterieheizung 10 zum gezielten zusätzlichen Aufwärmen der Traktionsbatterie 4 sowie eine Steuerungsvorrichtung 5 zum Steuern des ersten Elektromotors 3, der Traktionsbatterie 4, vorzugsweise der Batteriezellen 8 der Traktionsbatterie 4, und der Batterieheizung 10 sowie zum Auswerten der vom Temperatursensor 6 gemessenen Ist-Batterietemperaturen auf. Vorzugsweise ist die Steuerungsvorrichtung 5 zum Steuern des Verbrennungsmotors 11 ausgebildet.

Fig. 2 zeigt eine bevorzugte zweite Ausführungsform eines erfindungsgemäßen Kraftfahrzeugs 2 schematisch in einer Seitenansicht. Das Kraftfahrzeug 2 weist eine bevorzugte zweite Ausführungsform eines erfindungsgemäßen Antriebssystems 1 auf. Das Antriebssystem 1 weist zum Antreiben des Kraftfahrzeugs 2 einen ersten Elektromotor 3 sowie einen zweiten Elektromotor 7 auf. Der erste Elektromotor 3 und der zweite Elektromotor 7 sind zudem jeweils als Generator verwendbar, beispielsweise zum Rekuperieren beim Bremsen. Erfindungsgemäß kann zum Antreiben des Kraftfahrzeugs 2 auch noch ein in Fig. 2 nicht abgebildeter Verbrennungsmotor 11 (vgl. Fig. 1) vorgesehen sein. In diesem Ausführungsbeispiel ist der erste Elektromotor 3 zum Antreiben einer Vorderachse des Kraftfahrzeugs 2 und der zweite Elektromotor 7 zum Antreiben einer Hinterachse des Kraftfahrzeugs 2 ausgebildet.

Das Antriebssystem 1 weist zudem eine Traktionsbatterie 4 mit mehreren Batteriezellen 8 auf, von denen der besseren Übersicht halber nur einige dargestellt sind. In der Traktionsbatterie 4 ist ein Temperatursensor 6 zum Ermitteln der Ist-Batterietemperatur der Traktionsbatterie 4 angeordnet. Erfindungsgemäß können hierfür auch weitere Temperatursensoren 6 vorgesehen sein. Der Temperatursensor 6 kann erfindungsgemäß auch an einem Randbereich der Traktionsbatterie 4 angeordnet sein. Vorzugsweise weist das Antriebssystem 1 an jeder bzw. den meisten Batteriezellen 8 oder jedem bzw. den meisten Batteriezellenpaaren jeweils einen oder mehrere Temperatursensoren 6 auf.

Ferner weist das Antriebssystem 1 einen optionalen zusätzlichen elektrischen Energiespeicher 9 mit einer wesentlich geringeren Kapazität als die Traktionsbatterie 4 sowie eine Steuerungsvorrichtung 5 zum Steuern des ersten Elektromotors 3, des zweiten Elektromotors 7 der Traktionsbatterie 4, vorzugsweise der Batteriezellen 8 der Traktionsbatterie 4, und dem zusätzlichen elektrischen Energiespeicher 9 sowie zum Auswerten der vom Temperatursensor 6 gemessenen Ist-Batterietemperaturen auf. Der zusätzliche elektrische Energiespeicher 9 weist vorzugsweise einen Kondensator, insbesondere einen Supercap, und/oder eine Batterie auf.

### Bezugszeichenliste

- 1: Antriebssystem
- 2: Kraftfahrzeug
- 3: erster Elektromotor
- 4: Traktionsbatterie
- 5: Steuerungsvorrichtung
- 6: Temperatursensor
- 7: zweiter Elektromotor
- 8: Batteriezelle
- 9: zusätzlicher elektrischer Energiespeicher
- 10: Batterieheizung
- 11: Verbrennungsmotor

## Patentansprüche

1. Antriebssystem (1) für ein Kraftfahrzeug (2), aufweisend einen ersten Elektromotor (3) zum Antreiben des Kraftfahrzeugs (2), eine Traktionsbatterie (4) zum Versorgen des ersten Elektromotors (3) mit elektrischer Energie, eine Steuerungsvorrichtung (5) zum Steuern des ersten Elektromotors (3) und der Traktionsbatterie (4) sowie einen mit der Steuerungsvorrichtung (5) datenkommunizierend gekoppelten Temperatursensor (6) zum Ermitteln einer Ist-Batterietemperatur der Traktionsbatterie (4), wobei die Steuerungsvorrichtung (5) zum Betreiben des Antriebssystems (1) mehrere von einem Fahrer des Kraftfahrzeugs (2) wählbare Betriebsmodi aufweist, wobei die Betriebsmodi einen ersten Betriebsmodus sowie einen zweiten Betriebsmodus aufweisen, wobei der zweite Betriebsmodus gegenüber dem ersten Betriebsmodus ein steileres Beschleunigungsverhalten und/oder Verzögerungsverhalten aufweist,
**dadurch gekennzeichnet,**
**dass** die Steuerungsvorrichtung (5) ausgebildet und eingerichtet ist, in einem ersten Betriebszustand des Antriebssystems (1), in welchem der erste Betriebsmodus gewählt und die ermittelte Ist-Batterietemperatur geringer ist als ein vorgegebener unterer Batterietemperaturschwellwert, in den zweiten Betriebsmodus zu wechseln.

2. Antriebssystem (1) nach Anspruch 1,
**dadurch gekennzeichnet,**
**dass** die Steuerungsvorrichtung (5) ausgebildet und eingerichtet ist, bei Detektion des ersten Betriebszustands ein Warnsignal an den Fahrer auszugeben.

3. Antriebssystem (1) nach Anspruch 1 oder 2,
**dadurch gekennzeichnet,**
**dass** die Steuerungsvorrichtung (5) ausgebildet und eingerichtet ist, bei Detektion des ersten Betriebszustands eine Eingabeaufforderung an den Fahrer zur manuellen Freigabe des Wechsels vom ersten Betriebsmodus in den zweiten Betriebsmodus auszugeben.

4. Antriebssystem (1) nach einem der vorangegangenen Ansprüche,
**dadurch gekennzeichnet,**
**dass** das Antriebssystem (1) einen zweiten Elektromotor (7) aufweist, wobei die Steuerungsvorrichtung (5) ausgebildet und eingerichtet ist, den ersten Elektromotor (3) mit einer höheren Leistung als einer vorgegebenen Soll-Leistung und den zweiten Elektromotor (7) zum Kompensieren dieser Leistungsdifferenz im Generatorbetrieb zum Laden der Traktionsbatterie (4) zu betreiben.

5. Antriebssystem (1) nach einem der vorangegangenen Ansprüche,
**dadurch gekennzeichnet,**
**dass** die Traktionsbatterie (4) mehrere miteinander verschaltete Batteriezellen (8) aufweist, wobei die Steuerungsvorrichtung (5) ausgebildet und eingerichtet ist, elektrische Energie zwischen den Batteriezellen (8) gezielt zu verlagern.

6. Antriebssystem (1) nach einem der vorangegangenen Ansprüche,
**dadurch gekennzeichnet,**
**dass** das Antriebssystem (1) einen zusätzlichen elektrischen Energiespeicher (9) mit einer geringeren Kapazität als die Traktionsbatterie (4) aufweist, wobei die Steuerungsvorrichtung (5) ausgebildet und eingerichtet ist, elektrische Energie zwischen der Traktionsbatterie (4) und dem zusätzlichen elektrischen Energiespeicher (9) gezielt zu verlagern.

7. Antriebssystem (1) nach Anspruch 6,
**dadurch gekennzeichnet,**
**dass** der zusätzliche elektrische Energiespeicher (9) als Kondensator oder Batterie ausgebildet ist.

8. Antriebssystem (1) nach einem der vorangegangenen Ansprüche,
**dadurch gekennzeichnet,**
**dass** die Steuerungsvorrichtung (5) ausgebildet und eingerichtet ist, bei Detektion des zweiten Betriebszustands, in welchem der zweite Betriebsmodus gewählt und die ermittelte Ist-Batterietemperatur höher ist als ein vorgegebener oberer Batterietemperaturschwellwert, in den ersten Betriebsmodus zurück zu wechseln.

9. Antriebssystem (1) nach einem der vorangegangenen Ansprüche,
**dadurch gekennzeichnet,**
**dass** das Antriebssystem (1) eine Batterieheizung (10) zum Beheizen der Traktionsbatterie (4) aufweist, wobei die Steuerungsvorrichtung (5) zum Steuern der Batterieheizung (10) in Abhängigkeit der ermittelten Ist-Batterietemperatur ausgebildet und eingerichtet ist.

10. Kraftfahrzeug (2) mit einem Antriebssystem (1),
**dadurch gekennzeichnet,**
**dass** das Antriebssystem (1) als Antriebssystem (1) nach einem der vorangegangenen Ansprüche ausgebildet ist.
